# EUROPEAN PATENT APPLICATION

(11) **EP 1 211 891 A2**
(43) Date of publication of application: **05.06.2002**
(21) Application number: 01127155.8
(22) Date of filing: 15.11.2001
(51) Int. Cl.: H04N 5/445

(54) **Information reproducing apparatus and information display method**

(30) Priority: 16.11.2000 JP 2000349415
(71) Applicant: Pioneer Corporation, Meguro-ku, Tokyo (JP)
(72) Inventor: Yamaguchi, Hidetoshi, Kawagoe Koujou, Yamada, Kawagoe-shi, Saitama 350-8555 (JP)
(74) Representative: Popp, Eugen, Dr.

(57) **Abstract**

Information on attribute of image information stored on an information storage medium such as a DVD disc is acquired to identify the attribute information of a display scheme set in accordance with the attribute information of the image information. When the display scheme is set to a letter box, a valid image-area in which the image information is to be displayed and an invalid image-area which has not been conventionally used for display are set in accordance with the attribute information. For example, when character information is supplied from an external information supply device such as an FM receiver tuner for receiving an FM teletext broadcast, the image information reproduced from the information storage medium is displayed on the valid image-area and the character information is displayed on the invalid image-area, thereby providing the user with improved operability and convenience thereof.

## Description

### BACKGROUND OF THE INVENTION

The present invention relates to an information reproducing apparatus and an information display method for efficiently displaying the image information reproduced from an information storage medium such as a DVD (Digital Video Disc or Digital Versatile Disc) as well as external information from other external information sources.

The present application claims priority from Japanese Application No.2000-349415, the disclosure of which is incorporated herein by reference for all purposes.

As information storage media such as DVDs have come into widespread use in recent years, information reproducing apparatuses for reproducing information stored on those information storage media have been made multifunctional.

One example is an information reproducing apparatus for reproducing information such as the image information stored on an information storage medium such as a DVD and displaying the information on the screen of a monitor installed in a vehicle. This apparatus is provided with a basic function such as for displaying the image information on the monitor screen. Being provided with this function, known is such an apparatus, which further comprises a receiver tuner for receiving an FM teletext broadcast, for displaying received information (e.g., information on traffic, a weather forecast, or news) on the monitor screen to thereby provide as much useful information as possible.

Thus, the conventional information reproducing apparatus has been made multifunctional to provide as much useful information as possible. However, it cannot be said that those pieces of information are always provided in such a manner that users can easily make use thereof.

For example, in the case where a user such as a driver attempts to acquire information provided in an FM teletext broadcast while the image information reproduced from an information storage medium is being displayed on a monitor screen provided on an information reproducing apparatus mounted to a vehicle, first, the user has to operate a predetermined operation button switch or the like to interrupt the reproducing operation on the information storage medium. Thereafter, the user performs switching to operate the FM receiver tuner in order to allow the information provided in the FM teletext broadcast to appear on the monitor screen. Then, after having acquired the desired information from the text information displayed on the monitor screen, the user operates the predetermined operation switch button or the like again to restart reproducing information on the information storage medium. That is, the user has to perform complicated switching operations to change the contents displayed on the monitor.

### SUMMARY OF THE INVENTION

It is therefore an object of the present invention to provide an information reproducing apparatus and an information display method for displaying information with improved efficiency, e.g., for displaying a plurality of pieces of information in a manner such that the user can easily make use thereof.

To achieve the aforementioned object, the present invention provides an information reproducing apparatus for reproducing image information stored on an information storage medium to display the image information by a display unit. The apparatus comprises an identifying unit for identifying attribute information of a display scheme provided for the image information, a display area setting unit for determining a valid image-area to display the image information reproduced and an invalid image-area excluding the valid image-area in accordance with the attribute information identified by the identifying unit, and an image information generating unit for displaying the image information on the valid image-area, and for simultaneously displaying external information supplied from an external information source excluding the information storage medium within the range of the invalid image-area.

To achieve the aforementioned object, the present invention provides an information display method for reproducing image information stored on an information storage medium to display the image information by a display unit. The method comprises the steps of identifying attribute information of a display scheme provided for the image information, determining a valid image-area for displaying the image information reproduced and an invalid image-area excluding the valid image-area in accordance with the identified attribute information, and displaying the image information on the valid image-area and simultaneously displaying external information supplied from an external information source excluding the information storage medium within the range of the invalid image-area.

According to the information reproducing apparatus and the information display method of the present invention, image information reproduced from an information storage medium is displayed on a valid image-area, and external information supplied from an external information source can be displayed on an invalid area which has not been conventionally used for display.

### BRIEF DESCRIPTION OF THE DRAWINGS

The objects and advantages of the present invention will become clear from the following description with reference to the accompanying drawings, wherein:
Fig. 1 is an explanatory view illustrating the logical data structure of DVD-Video;
Figs. 2(a) and 2(b) are explanatory views illustrating the logical data structure of video manager information and video title set information, respectively;
Fig. 3 is a block diagram illustrating a structure of an information reproducing apparatus according to an embodiment;
Fig. 4 is a flowchart illustrating an operation of the information reproducing apparatus; and
Fig. 5 is a schematic view illustrating a monitor screen on which a main image and text information acquired from an FM teletext broadcast are appearing in a display scheme of a letter box.

### DETAILED DESCRIPTION OF THE PREFERRED EMBODIMENTS

Now, the present invention will be explained below with reference to the accompanying drawings in accordance with the embodiments. As an embodiment, an apparatus for reproducing information and the method for displaying the information are described below, where the apparatus is a vehicle-mounted navigation system or the like for reproducing the information stored on a DVD-Video-compatible information storage medium (hereinafter referred to as the "DVD disc") for display.

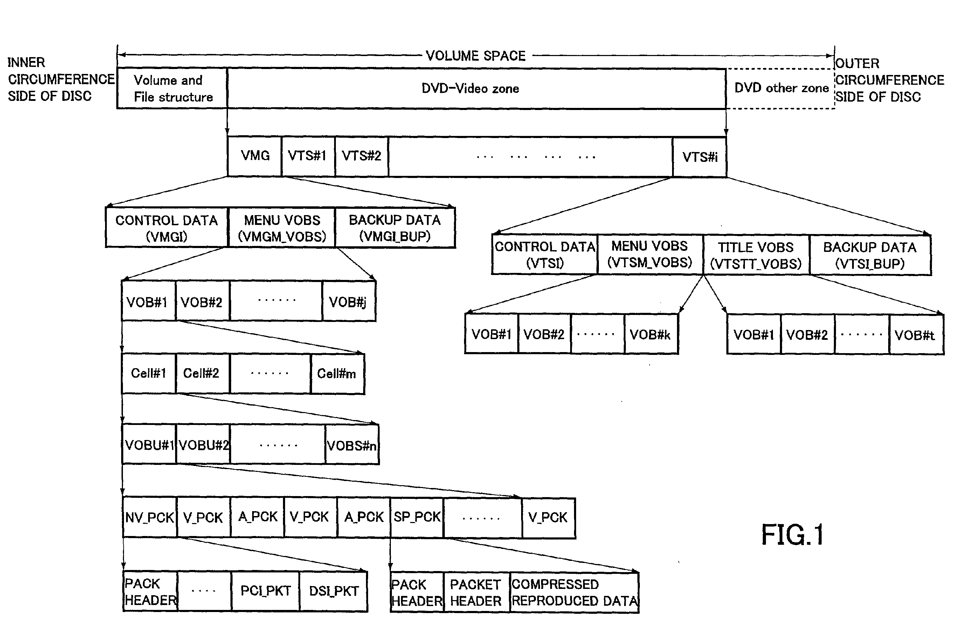

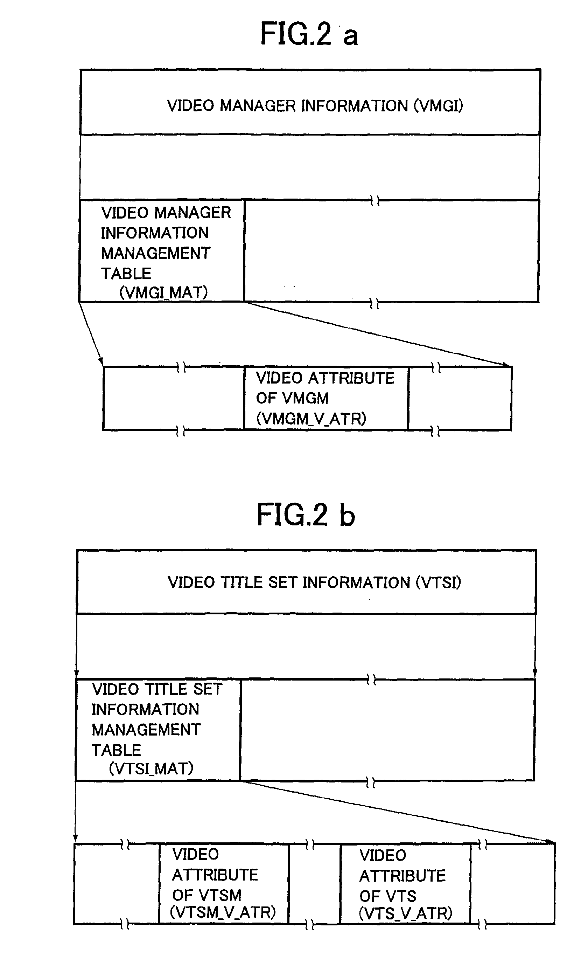

First, referring to Figs. 1 and 2, the logical data structure of a DVD-Video-compatible DVD disc will be briefly explained.

In Fig. 1, a volume space of the DVD disc is largely divided into a volume and file structure zone for storing control information on a logical format which conforms to both the UDF (Universal Disc Format) and ISO9660, a DVD-Video zone, and DVD other zone. Of those zones, the DVD-Video zone serves as a data storage area for storing DVD-Video data. The management information necessary to reproduce DVD-Video data is also stored (recorded) on the DVD-Video zone.

Furthermore, the DVD-Video zone comprises a video manager VMG, and one or more or 99 or less video title sets VTS#1 - VTS#i.

The video manager VMG comprises a video object set VMGM_VOBS for VMG menu or the entity of a reproduced stream, video manager information VMGI or control information indicative of program chain information (PGCI) on the method for reproducing the video object set VMGM_VOBS for VMG menu, a reproduced stream attribute and the like, and backup data VMGI_BUP for video manager information VMGI.

As shown in Fig. 2(a), the aforementioned video manager information VMGI is provided with a video manager information management table VMGI_MAT for describing the attribute information VMGM_V_ATR of the video object set VMGM_VOBS for VMG menu, thereby allowing the authors of contents or the like to describe the following information as the attribute information VMGM_V_ATR in advance.

That is, the attribute information includes: a "video compression mode" for specifying a compression scheme such as MPEG1 or MPEG2; a "TV system" for specifying the number of scan lines and a field frequency upon reproducing a video stream; an "aspect ratio" for specifying the length-to-width ratio of a reproduced image; a "display mode" for specifying a display mode (such as panning scan or a letter box) which is allowed on a monitor having a 4-to-3 aspect ratio; a "source image resolution" for specifying the resolution of a reproduced image; and a "source image letter box" for specifying whether the output provided by reproducing a video stream is a letter box.

Accordingly, these pieces of attribute information preliminary described by the contents authors allow the information reproducing apparatus to perform display operations upon reproducing as the contents authors have intended, in accordance with the attribute information VMGM_V_ATR, and attribute information VTSM_V_ATR and VTS_V_ATR which are described later.

Referring back to Fig. 1, each of the video title sets VTS#1 - VTS#i comprises a video object set for VTS menu VTSM_VOBS or an entity of a reproduced stream, a video object set VTSTT_VOBS for video titles, video title set information VTSI or control information indicative of the program chain information (PGCI) on the reproducing scheme for the video object set VTSM_VOBS for VTS menu and the video object set VTSTT_VOBS for video titles, reproduced stream attributes and the like, and backup data VTSI_BUP for the video title set information VTSI.

As shown in Fig. 2(b), the aforementioned video title set information VTSI is provided with a video title set information management table VTSI_MAT for describing the attribute information VTSM_V_ATR of the video object set VTSM_VOBS for VTS menu and the attribute information VTS_V_ATR of the video object set VTSTT_VOBS for video titles. This allows the contents authors to describe, as the attribute information VTSM_V_ATR and VTS_V_ATR, the same information as the aforementioned attribute information VMGM_V_ATR of the video manager information VMGI management table VMGI_MAT in advance.

That is, as the attribute information VTSM_V_ATR and VTS_V_ATR, it is possible to describe the aforementioned information such as the "video compression mode", the "TV system", the "aspect ratio", the "display mode", the "source image resolution", and the "source image letter box". In addition, the information reproducing apparatus is adapted to perform display operations upon reproducing as the contents authors have intended, in accordance with the attribute information VTSM_V_ATR and VTS_V_ATR, and the aforementioned attribute information VMGM_V_ATR or the so-called video stream attribute information.

Referring back to Fig. 1, each of information VMGM_VOBS, VTSM_VOBS, and VTSTT_VOBS comprises one or more video objects (VOB), VOB#1 - VOB#j, VOB#1 - VOB#k, and VOB#1 - VOB#t, respectively, and each of the video objects comprises a plurality of cells.

That is, the cell is the unit for reproducing real time data. It is possible to provide the video manager VMG or the video title set VTS with a plurality of cells. In addition, the aforementioned program chain information PCGI is adapted to specify the order of reproducing. Incidentally, shown as a typical example in the figure are Cell#1 - Cell#m in the video manager VMG.

Each cell (represented by Cell#1) also comprises a plurality of video object units (VOBU) VOBU#1 - VOBU#n. Furthermore, each of video object units (represented by VOBU#1) comprises a navigation pack NV_PCK which is always provided at the head, and a video pack V_PCK, an audio pack A_PCK, and a sub-picture pack SP_PCK, which are provided in a time-sharing manner as required.

The navigation pack NV_PCK comprises a presentation control information packet PCI_PKT and a data search information packet DSI_PKT which follow the pack header or the like.

The sub-picture pack SP_PCK comprises a pack header and reproduced data (compressed reproduced data) to be data compressed for storage.

Furthermore, information on coordinates for indicating the display area of a sub-picture is normalized for storage in the sub-picture pack SP_PCK in a time sharing manner. This allows the information reproducing apparatus to acquire sub-picture stream attribute information such as the display area, the display timing, the color, and the contrast of a sub-picture from a sub-picture display control sequence table SP_DCSQT in a sub-picture unit SPU which is generated by linking a plurality of sub-picture packs SP_PCK upon reproducing.

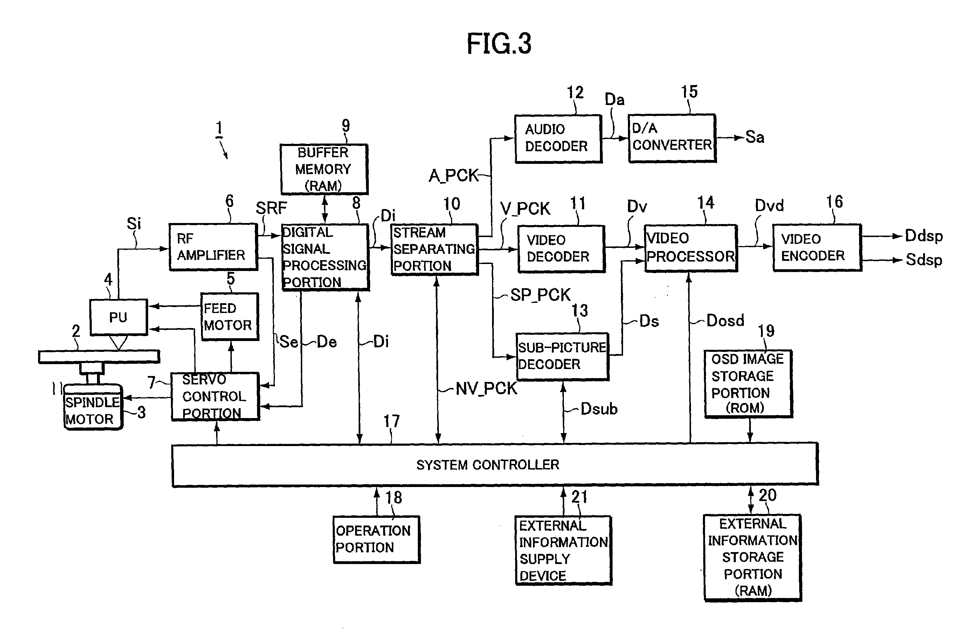

Now, the configuration of an information reproducing apparatus according to this embodiment will be explained with reference to the block diagram of Fig. 3.

The information reproducing apparatus 1 comprises a spindle motor 3 for rotatably driving a DVD disc 2, loaded at a predetermined clamp position, at a constant linear velocity (or angular velocity), and an optical pickup 4 for optically reading the information recorded on the DVD disc 2 for photoelectric conversion of the information to an electric signal Si. The information reproducing apparatus 1 also comprises a feed motor 5 for moving the optical pickup 4 in the radial direction of the DVD disc 2, an RF amplifier 6, a servo control portion 7, a digital signal processing portion 8, a buffer memory 9 formed of random access memories (RAM), and a system controller 17 for centralized control of the entire operation of the information reproducing apparatus 1.

The RF amplifier 6 generates an RF signal SRF from the electric signal Si outputted by the optical pickup 4 to output the RF signal SRF to the digital signal processing portion 8. The RF amplifier 6 also generates various error signals Se such as a tracking error signal or a focus error signal from the electric signal Si to output the error signals Se to the servo control portion 7.

In response to an instruction from the system controller 17, the servo control portion 7 performs servo control (such as focus servo, tracking servo, rotation servo, and tilt servo control) on the spindle motor 3, the optical pickup 4, and the feed motor 5 in accordance with the various error signals Se from the RF amplifier 6 and a sync error signal De detected at the digital signal processing portion 8.

The digital signal processing portion 8 permits an A/D conversion of the RF signal SRF from the RF amplifier 6 into a signal, which is in turn subjected to the signal demodulation processing and the error correction processing which conform to the DVD-Video data format, and then temporarily stored in the buffer memory 9. Subsequently, the digital signal processing portion 8 outputs the stored demodulated data Di to a stream separating portion 10 and the system controller 17 in accordance with an instruction from the system controller 17. The digital signal processing portion 8 also supplies the sync error signal De obtained by the demodulation and the error correction processing to the servo control portion 7.

The stream separating portion 10 separates and extracts the navigation pack NV_PCK, the video pack V_PCK, the audio pack A_PCK, and the sub-picture pack SP_PCK, which are included in the aforementioned video object unit VOBU, from the demodulated data Di supplied by the digital signal processing portion 8. Then, the stream separating portion 10 supplies the separated and extracted navigation pack NV_PCK to the system controller 17, the video pack V_PCK to a video decoder 11, the audio pack A_PCK to an audio decoder 12, and the sub-picture pack SP_PCK to a sub-picture decoder 13, respectively.

In accordance with an instruction from the system controller 17, the video decoder 11 performs the predetermined decoding processing on the video pack V_PCK and then outputs the decoded video data Dv to a video processor 14.

In accordance with an instruction from the system controller 17, the audio decoder 12 performs the predetermined decoding processing on the audio pack A_PCK to thereby generate digital audio data Da, which is in turn converted by a D/A converter 15 into an analog audio signal Sa having an audio frequency band for output.

In accordance with an instruction from the system controller 17, the sub-picture decoder 13 generates the sub-picture unit SPU from the sub-picture pack SP_PCK and performs the predetermined decoding processing, thereby generating data Ds of the aforementioned sub-picture to output the sub-picture data Ds to the video processor 14. The sub-picture decoder 13 also decodes sub-picture position data Dsub indicative of the display area of a sub-picture included in the sub-picture unit SPU and then supplies the resulting data to the system controller 17.

In accordance with an instruction from the system controller 17, the video processor 14 combines the video data Dv and sub-picture data Ds, which are supplied from the video decoder 11 and the sub-picture decoder 13, with OSD image data Dosd, described later, supplied from the system controller 17 together, thereby generating image data Dvd which is in turn outputted to a video encoder 16.

The video encoder 16 converts the image data Dvd for output into digital image data Ddsp and a composite signal Sdsp, which can be displayed on the monitor. Subsequently, these digital image data Ddsp and the composite signal Sdsp are supplied to the monitor (not shown), thereby displaying contents information and OSDs, described later, and so forth.

The system controller 17 is provided with a micro processor (MPU) for executing the preset system program, and is connected with an operation portion 18 such as a keyboard, an OSD image storage portion 19 formed of a read-only memory (ROM) and an external information storage portion 20 formed of a random access memory (RAM).

Furthermore, the system controller 17 can be detachably or fixedly connected with an external information supply device 21.

For example, as the external information supply device 21, the system controller 17 can be fixedly connected with a receiver tuner for receiving an FM teletext broadcast, detachably or fixedly connected with a receiver device capable of receiving an FM teletext broadcast, or detachably connected with a portable radio device (such as a mobile radio phone or a mobile information terminal device).

The operation portion 18 is provided with various operation button keys such as a reproducing operation key for instructing the start of reproducing, a selector key for instructing the selection of a stream, numerical keys, and alphabet keys. The user can selectively operate these operation button keys to thereby direct the desired instruction to the system controller 17.

The OSD image storage portion 19 stores the OSD image data Dosd which is used in OSD for the system controller 17 to urge the user to perform the desired operation and in OSD to inform the user of the operation status of the information reproducing apparatus 1.

Incidentally, the OSD is an abbreviation of "On Screen Display" and refers to displaying characters, symbols, figures or the like on a monitor screen in accordance with the OSD image data Dosd or the contents of display. On the other hand, the OSD image data Dosd is in the bitmap format for expressing characters, symbols, figures and the like.

In accordance with an instruction from the system controller 17, the external information storage portion 20 stores temporarily external information supplied from the external information supply device 21. Although specifically detailed later, the system controller 17 stores the character information supplied from the external information supply device 21 in the external information storage portion 20. In addition, the system controller 17 performs processing such as converting the character information into data in accordance with the OSD image data Dosd in the OSD image storage portion 19 and then supplying the resulting data to the video processor 14.

Furthermore, as described above, in accordance with the contents of the desired instruction provided by the user's operation at the operation portion 18, the system controller 17 directs the video processor 14 to generate the image data Dvd. The system controller 17 also analyzes the video manager information VMGI delivered from the digital signal processing portion 8 and stream separating portion 10, the video title set information VTSI, the program chain information PGCI, the presentation control information packet PCI_PKT, and the data search information packet DSI_PKT to thereby perform various controls, necessary for reproducing, on the stream separating portion 10.

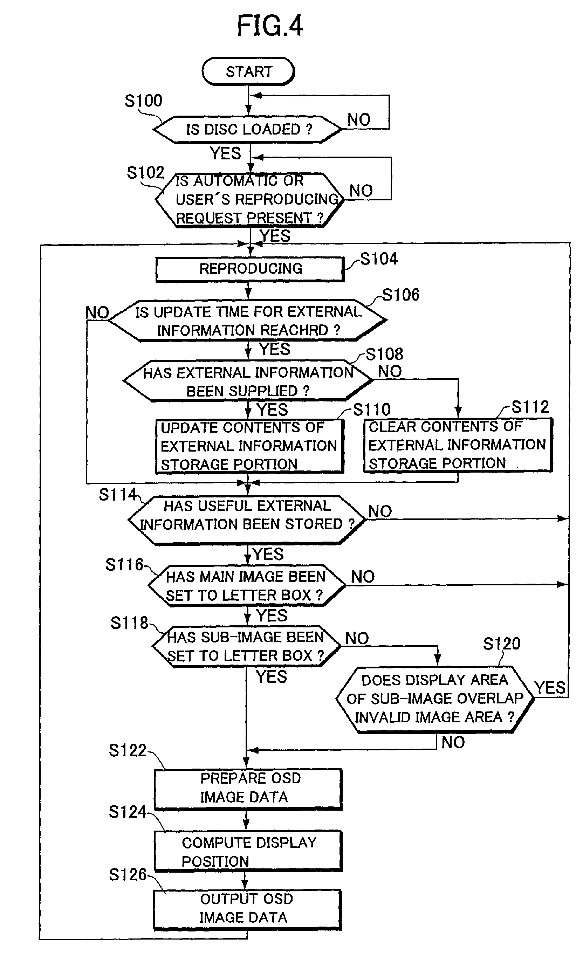

Now, the operation of the information reproducing apparatus 1 having the aforementioned structure will be explained below with reference to the flowchart shown in Fig. 4. Incidentally, an explanation is given to an information reproducing apparatus in which the system controller 17 is connected with a receiver tuner, for receiving an FM teletext broadcast, as the external information supply device 21.

Referring to Fig. 4, when the power is turned on, the operation is initiated to determine whether the DVD disc has been loaded onto the so-called clamp position (step S100).

When it has been determined that the DVD disc has been loaded, the process proceeds to a step S102 to reproduce the information stored in a predetermined area of the DVD disc and then determines whether an automatic reproducing command has been acquired. It is also determined whether the user has issued a reproducing start command from the operation portion 18. When the automatic reproducing command has been acquired or the user has issued the reproducing start command, the process proceeds to a step S104 to start reproducing the information stored in the DVD-Video zone.

Then, at a step S106, it is checked whether the value of a program timer (not shown), built in the system controller 17, has reached the predetermined update time . When the update time has not been reached (if "NO"), the process proceeds to a step S114, described later. On the other hand, when the update time has been reached (if "YES"), the process proceeds to a step S108 to determine whether the external information supply device 21 has supplied character information as external information to the system controller 17.

At this step, when the character information has been supplied (if "YES"), the contents of the external information storage portion 20 is updated to the latest character information and then the program timer is reset to start at a step S110, and thereafter the process proceeds to the step S114. When the character information has not been supplied (if "NO"), the contents of the external information storage portion 20 is cleared at a step S112 and then the program timer is reset to start at the step S112, and thereafter the process proceeds to the step S114.

At the step S114, which the process has reached through the processing in any one of steps S106, S110, or S112, it is determined whether valid character information is stored in the external information storage portion 20. When no valid character information is stored there, for example, when the external information storage portion 20 has been cleared (if "NO"), the processing is continued from the step S104. When valid character information is stored there (if "YES"), the process proceeds to a step S116 to check the "aspect ratio" and "display mode" in the video stream attribute information VMGM_V_ATR, VTSM_V_ATR, and VTS_V_ATR, which have been reproduced from the DVD disc 2. Then, the process determines whether the display scheme for an main image obtained by reproducing a video stream has been set to a letter box or panning scan.

Then, when the display scheme of the main image has been set to the letter box (if "YES"), the process proceeds to a step S118 to identify the display scheme of a sub-picture or so-called sub-image such as subtitles in accordance with the sub-picture stream and the video stream attributes.

On the other hand, when the display scheme of the main image has not been set to the letter box (if "NO"), the process continues the processing from the step S104.

The process proceeds to a step S122 when the sub-image is set to the letter box (which is identified in accordance with the "source picture letter box information" of the video stream attribute) at the step S118, that is, when the sub-image is so set as to be displayed within the display area (referred to as the "valid image-area") for displaying the main image (if "YES").

On the other hand, even when the sub-image is not set to the letter box, it is determined at a step S120 whether a "sub-picture display area" overlaps an "invalid image-area" by comparing the "sub-picture display area" obtained by the sub-picture position data Dsub included in the sub-picture unit SPU with the "invalid image-area" occurring outside the "valid image-area". If not so (if "NO"), the process proceeds to the step S122. When the "sub-picture display area" overlaps the "invalid image-area" (if "YES"), the processing from the step S104 is repeated.

At the step S122, the character information stored in the external information storage portion 20 is data-converted with the OSD image data Dosd in the OSD image storage portion 19.

Subsequently, at the step S124, in order to arrange and display the converted OSD image data Dosd within the range of the "invalid image-area", the display position of the OSD image data Dosd is computed. Thereafter, at a step S126, the OSD image data Dosd added by the information on the display position is supplied to the video processor 14 for the OSD display of the character information within the range of the "invalid image-area". Then, the processing from the the step S104 is repeated.

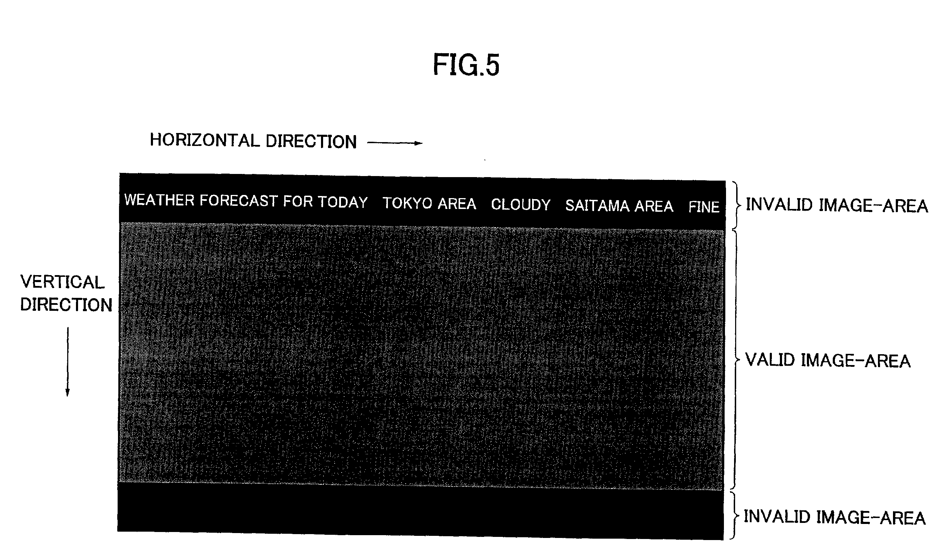

As described above, when the attribute of the video stream reproduced from the DVD disc 2 is set to the display scheme of the letter box, the information reproducing apparatus 1 sets the "valid image-area" in accordance with the aspect ratio of the letter box as schematically shown in Fig. 5. Then, the information reproducing apparatus 1 reproduces the main image obtained by reproducing a video stream to display the main image on the "valid image-area" and multiplexes the character information supplied from the external information supply device 21 for the OSD of the resulting character information on the "invalid image-area" occurring outside the valid image-area.

Accordingly, the information reproducing apparatus 1 provides an effect of making display efficient or making use of the "invalid image-area" which has not been conventionally used for effective display.

Furthermore, the user is provided with improved convenience since a main image and character information are made simultaneously available to the user. Character information is also automatically displayed, thereby providing the user with improved operability and convenience. Among other things, the vehicle-mounted navigation device can provide the driver or other people with useful information for driving by displaying the image reproduced from the DVD disc on the "valid image-area" and by displaying information such as traffic information or weather forecast transmitted in an FM teletext broadcast on the "invalid image-area".

Incidentally, this embodiment has exemplified a case where the character information obtained from an FM teletext broadcast is used for OSD while a DVD-Video-compatible DVD disc is being reproduced. However, the present invention can also be applied to cases for reproducing information stored on a DVD disc which belongs to other DVD families or on other type of information storage medium such as a CD (Compact Disc). Furthermore, in addition to the OSD of information from an FM teletext broadcast, it is also possible to provide the OSD of external information provided over a global network such as an Internet.

As described above, according to the information reproducing apparatus and the information display method of the present invention, the attribute information of the display scheme set to image information is identified. In accordance with the attribute information identified as such, a valid image-area for displaying the reproduced image information and an invalid image-area excluding the valid image-area are determined. The image information is displayed on the valid image-area, and the external information supplied from other external information source excluding an information storage medium is displayed within the range of the invalid image-area. Accordingly, this provides an effect of making display efficient or making use of the invalid image-area which has not been conventionally used for effective display.

Furthermore, the user is provided with improved convenience since a main image and character information are made simultaneously available to the user. In addition, character information is also automatically displayed, thereby providing the user with improved operability and convenience.

While there has been described what are at present considered to be preferred embodiments of the present invention, it will be understood that various modifications may be made thereto, and it is intended that the appended claims cover all such modifications as fall within the true spirit and scope of the invention.

## Claims

1. An information reproducing apparatus(1) for reproducing image information stored on an information storage medium(2) to display the image information by display means, said apparatus comprising:
identifying means(17) for identifying attribute information of a display scheme provided for said image information;
display area setting means(17) for determining a valid image-area to display said image information reproduced and an invalid image-area excluding said valid image-area in accordance with the attribute information identified by said identifying unit; and
image information generating means(17,19) for displaying said image information on said valid image-area, and for simultaneously displaying external information supplied from an external information source(21) excluding said information storage medium(2) within a range of said invalid image-area.

2. The information reproducing apparatus according to claim 1, wherein said attribute information comprises an aspect ratio for specifying the length-to-width ratio of a reproduced image, and a display mode for specifying a mode such as panning scan or a letter box.

3. The information reproducing apparatus according to claim 1, wherein said external information is character information obtained from an FM teletext broadcast.

4. An information display method for reproducing image information stored on an information storage medium(2) to display the image information by a display unit, said method comprising the steps of:
identifying attribute information of a display scheme provided for said image information(S116);
determining a valid image-area for displaying said image information reproduced and an invalid image-area excluding said valid image-area in accordance with said identified attribute information(S124); and
displaying said image information on said valid image-area(S126), and simultaneously displaying external information supplied from an external information source(21) excluding said information storage medium(2) within a range of said invalid image-area.

5. The information display method according to claim 4, wherein said attribute information comprises an aspect ratio for specifying the length-to-width ratio of a reproduced image, and a display mode for specifying a mode such as panning scan or a letter box.

6. The information display method according to claim 4, wherein said external information is character information obtained from an FM teletext broadcast.
